# EUROPÄISCHE PATENTSCHRIFT

(11) **EP 2 190 971 B1**
(45) Veröffentlichungstag und Bekanntmachung des Hinweises auf die Patenterteilung: **12.11.2014**
(21) Anmeldenummer: 08802409.6
(22) Anmeldetag: 19.09.2008
(51) Int. Cl.: C12C 7/20, C12C 7/28, C12C 13/00, C12C 13/08

(54) **VERFAHREN UND VORRICHTUNG ZUR AROMARÜCKGEWINNUNG BEIM BIERBRAUEN**
METHOD OF, AND APPARATUS FOR, FLAVOUR RECOVERY IN BEER BREWING
PROCÉDÉ ET DISPOSITIF DE RÉCUPÉRATION D'ARÔMES LORS DU BRASSAGE DE BIÈRE

(30) Priorität: 24.09.2007 DE 102007045685
(43) Veröffentlichungstag der Anmeldung: 02.06.2010
(73) Patentinhaber: Krones AG, 93073 Neutraubling (DE)
(72) Erfinder: WILHELM, Wolfgang Peter, 84030 Landshut (DE)
(74) Vertreter: Grünecker, Kinkeldey, Stockmair & Schwanhäusser
(86) Internationale Anmeldenummer: PCT/EP2008/007902
(87) Internationale Veröffentlichungsnummer: WO 2009/040059

(56) Entgegenhaltungen:
- WO-A-97/15654
- WO-A-99/06525
- WO-A-2005/044971
- WO-A-2008/125292
- DD-A1- 236 941
- DE-A1-102004 034 555
- GB-A- 953 445
- JACOB F ET AL: "WORT STRIPPING - EFFECTS ON WORT AND BEER QUALITY" 1. Januar 2001 (2001-01-01), BRAUWELT, NUERNBERG, DE, PAGE(S) 166 - 167 , XP008075852 ISSN: 0724-696X das ganze Dokument

## Beschreibung

Die Erfindung betrifft ein Verfahren sowie eine Vorrichtung zur Aromarückgewinnung beim Bierbrauen.

Aus der DE 10 2004 034 555 A1 ist es bekannt, den Würzedampf, der in der Kochphase der Würze beim Bierbrauen entweicht, im Gegenstrom mit dem auskondensierten Dampf einer Rektifikation zu unterziehen. Das auf einem Kolonnenboden einer Auftriebskolonne angesammelte Dampfkonzentrat fließt über einen Ablaufschacht des jeweiligen Kolonnenbodens auf den jeweils nächst tiefer gelegenen Kolonnenboden bzw. von dem untersten Kolonnenboden zurück in die Sudpfanne. In sogenannten Sprudelschichten auf den Kolonnenböden werden durch Kondensation von Wasser und schwerflüchtigen Aromastoffen des Würzedampfs die in der Gasphase verbleibenden leichtflüchtigen Aromastoffe sukzessiv angereichert. Der Trenneffekt wird durch die freiwerdende Kondensationswärme verstärkt, indem das rückströmende Dampfkondensat erwärmt wird, wodurch mitkondensierte, leichtflüchtige Aromastoffe aus dem Dampfkondensat wieder verdampfen. Dadurch wird die benötigte Gesamtverdampfung deutlich reduziert, wodurch Energie gespart werden kann.

Aus der GB 953 445 ist ein Verfahren bekannt, mit dem die Art, Menge und Konzentration von Hopfenöl in der mit Hopfen versetzten Würze kontrolliert werden kann. Ein Teil der Würze kann im Gegenstrom zum aufsteigenden Dampf von oben in einen Turm eingegeben werden. Der Dampf, der den Turm verlässt, hat Öle aus der Würze ausgedampft und wird dann fraktioniert und zu einem Kondensor geleitet. Der kondensierte Dampf kann teilweise der mit Hopfen versetzten Würze wieder zugeführt werden. Durch Wahl des Anteils an Würze und Menge des Konzentratextrakts kann eine Menge des Hopfenöls im Endprodukt kontrolliert werden.

Aus der DD 236 941 A1 ist ein Verfahren bekannt, bei dem zur Verstärkung des hopfenartigen Geschmacks und Geruchs im Bier ein Teil oder das gesamte normale Produktionswasser das zum Einweichen, zum Hochheizen der Maische, zum Auslaugen beim Läutern oder zum Verdünnen der Würze vor oder nach dem Anstellen sowie zum Verdünnen der Jung- und Fertigbiere verwendet werden kann, durch dem beim Würzekochprozess gewonnenen kondensierten Brüden ersetzt werden kann.

Beim Würzekochen können wertvolle Aromastoffe verloren gehen, wovon besonders Hopfenaromastoffe betroffen sein können. Durch späte Hopfengaben und durch Whirlpoolhopfung können diese Verluste etwas ausgeglichen werden. Im Ausland kann nach dem Würzekochen mit teuren Hopfenessenzen gearbeitet werden, in Deutschland ist dies aber aufgrund der Gesetzeslage (Reinheitsgebot) nicht möglich.

Ziel der vorliegenden Erfindung ist es, ein Verfahren und eine Vorrichtung zur Aromarückgewinnung beim Bierbrauen zur Verfügung zu stellen, sodass Aromastoffe, die während des Würzekochens durch den Brüden verlorengegangen sind, insbesondere auch unter Einhaltung des Reinheitsgebots der Würze zugeführt werden können.

Diese Aufgabe wird mit einem Verfahren nach Anspruch 1 und einer Vorrichtung nach Anspruch 7 gelöst.

Bevorzugte Ausführungsformen sind in den abhängigen Ansprüchen offenbart.

Bei dem erfindungsgemäßen Verfahren zur Aromarückgewinnung beim Bierbrauen wird der Brüden, der während der Kochphase der Würze entweicht, einer dampfseitig mit einer Würzepfanne verbundenen Rektifizierkolonne zugeleitet. In dieser kann der Brüden rektifiziert werden, wobei mehrere aromahaltige Destillate gewonnen und der Würze nach der Kochphase zugeführt werden kann.

Mehrere aromahaltige Destillate können in der Rektifizierkolonne aus dem Brüden zurück gewonnen werden. Zudem ist es beispielsweise möglich, unedle aromahaltige Destillate (Destillate, die beim Bierbrauen nicht erwünscht sind) in einem Arbeitsgang abzutrennen. Edle aromahaltige Destillate (Destillate, die beim Bierbrauen erwünscht sind) können gewonnen und/oder gespeichert werden und nach der Rückführung zu der erkalteten Würze zu neuen Aromavariationen im Bier verwendet werden.

Ein Vorteil dieser Aromarückführung kann beispielsweise die Einsparung von Hopfen sein. Auch lassen sich Schwankungen in den verwendeten Rohstoffchargen, wie beispielsweise unterschiedliche Geschmacksnuancen von Rohstoffen aus unterschiedlichen Anbaugebieten, durch Variation der gewonnen aromahaltigen Destillate abfedern. Nicht nur Hopfenaromastoffe können rückgewonnen und/oder analysiert werden, sondern beispielsweise können Auswirkungen auf ein oder mehrere Aromata beispielsweise im Maisch- und Kochverfahren bereits in der Rektifikation des Brüden erkannt und/oder beispielsweise zur Gewinnung für Aromavariationen für das Bier verwendet werden.

Da das beschriebene Verfahren rein technisch umgesetzt werden kann, ist die Vorgehensweise der Aromarückgewinnung und Wiederzuführung des Aromas zur Würze reinheitsgebotkonform.

Das aromahaltige Destillat wird mittels mehrere Kolonnenböden gewonnen, den die Rektifizierkolonne umfasst. Die Rektifizierkolonne kann aber auch 5, 10, 20, 30 oder mehr Kolonnenböden umfassen. In der Rektifizierkolonne kann ein Teil des aufsteigenden Brüdens auskondensieren. Gleichzeitig kann Dampfkondensat eines Kolonnenbodens auf einen und/oder mehrere darunter liegende Kolonnenböden zurückfließen. Der auf dem untersten Boden durch Kondensationswärme des Brüdens vom Kolonnenboden aus bereits vorhandenem Kondensat aufsteigende Dampf, kann zu einem weiteren, oberhalb gelegenen Kolonnenboden gelangen, in welchem wiederum ein Teil des Dampfes kondensieren kann. Der von diesem Kolonnenboden aufsteigende Dampf kann abermals zu einem Boden gelangen, auf welchem sich die Vorgänge wiederholen können. Je weiter ein Kolonnenboden von der Würzepfanne entfernt ist, um so niedriger kann seine Temperatur, im Vergleich zu näher an der Würzepfanne liegenden Kolonnenböden, sein. Die Trennwirkung der Gegenstromdestillation beruht darauf, dass aus einem siedenden Flüssigkeitsgemisch die Stoffe in einem Verhältnis verdampfen können, welche durch ihre Gleichgewichtskurve bestimmt ist.

Durch die Rektifizierkolonne mit der Kolonnenböden ist es beispielsweise möglich, im Brüden vorhandene Aromastoffe durch Kondensation auf den Kolonnenboden zu extrahieren.

Die aromahaltige Destillate können über wenigstens ein Ventil vom Kolonnenboden abgezogen werden und der Würze nach der Kochphase zugeführt werden. Das so gewonnene aromahaltige Destillat kann beispielsweise in einem Speicherbehälter gespeichert werden, bis es für ein oder mehrere Verwendungen gebraucht werden und dem Speicherbehälter entnommen werden kann. Aromahaltige Destillate, die in dem Bierbrauprozess nicht erwünscht sind, können entsorgt werden. Ventile können sich im Anschluss an alle oder einige Kolonnenböden befinden.

Es ist auch möglich, die aromahaltige Destillate zu untersuchen, bevor sie der Würze nach der Kochphase zugeführt werden Dabei kann festgestellt werden, ob es sich um ein erwünschtes Destillat handelt und/oder wie die Zusammensetzung des aromahaltigen Destillats beschaffen ist. Auch unerwünschte aromahaltige Destillate können entsprechend untersucht werden.

Im Anschluss an das Ventil kann sich ein Speicherbehälter befinden, um das aromahaltige Destillat aufzunehmen. Somit ist es möglich das aromahaltige Destillat zu speichern, bis es der Würze nach der Kochphase wieder zugeführt werden kann. Auch aus dem mindestens einen Speicherbehälter kann aromahaltiges Destillat für eine oder mehrere Untersuchungen entnommen werden, um beispielsweise festzustellen, ob es sich um ein erwünschtes oder ein unerwünschtes aromahaltiges Destillat handelt. Speicherbehälter können sich im Anschluss an alle oder einige Ventile befinden.

Der Speicherbehälter kann mit Inertgas befüllt sein. Durch eine sauerstofffreie Speicherung können oxidative Reaktionen der gewonnen aromahaltigen Destillate vermieden werden.

Die zu kochende Würze kann der Würzepfanne diskontinuierlich oder kontinuierlich zugeführt werden. Bei der kontinuierlichen Betriebsweise erfolgt ein ständiger Zulauf der Würze, und die Rektifizierungskolonne befindet sich in einem quasistationären Gleichgewichtszustand. Bei der diskontinuierlichen Betriebsweise wird eine bestimmte Menge an Würze vorgelegt und die Rektifizierungskolonne angefahren, bis sich dann auf den Kolonnenböden ein Gleichgewicht eingestellt hat. Dann kann das wenigstens eine aromahaltige Destillat von einem entsprechenden Kolonnenboden entnommen werden.

In einer vorteilhaften Ausführung der erfindungsgemäßen Vorrichtung kann eine Würzepfanne dampfseitig mit einer Rektifizierkolonne verbunden sein, die wenigstens einen Kolonnenboden und wenigstens ein Ventil für die Rückführung der aromahaltigen Destillate umfassen kann.

Ein Vorteil dieser Vorrichtung ist beispielsweise, dass auf dem wenigstens einen Kolonnenboden wenigstens ein aromahaltiges Destillat gewonnen werden kann, das über ein Ventil entnommen werden kann und dann beispielsweise in einem Speicherbehälter, der sich direkt nach oder in einiger Entfernung vom Ventil befinden kann, gespeichert werden kann.

Weiterhin kann die Würzepfanne einen Innenkocher umfassen. Der Innenkocher kann die Würze mittels einer Pumpe durch ein Zentralrohr zu einer sogenannten Strahlpumpe führen, wobei es in diesem Bereich zu einem Sogeffekt kommen kann, der zu einer kontinuierlichen Durchströmung der Heizrohre eines Rohrbündel-Wärmetauschers des Innenkochers führen kann. Dadurch kann ein Teilstrom der Würze in den Rohren nach oben gefördert und zusammen mit der durch das Zentralrohr gepumpten Würze auf der Würzeoberfläche verteilt werden. Ein Vorteil dieser Zwangsanströmung ist, dass ein Pulsieren der Würze während der Aufheizphase verhindert wird. Zudem können Anstiche im Pfannenboden eine gute Durchmischung des Pfanneninhalts gewährleisten.

Ausführungsformen der Erfindung sollen anhand der beiliegenden Figur erläutert werden. Die einzige Figur zeigt eine schematische Schnittdarstellung einer Vorrichtung zur Würzekochung mit einer Würzepfanne und einer dampfseitig mit dieser verbundenen Rektifizierkolonne.

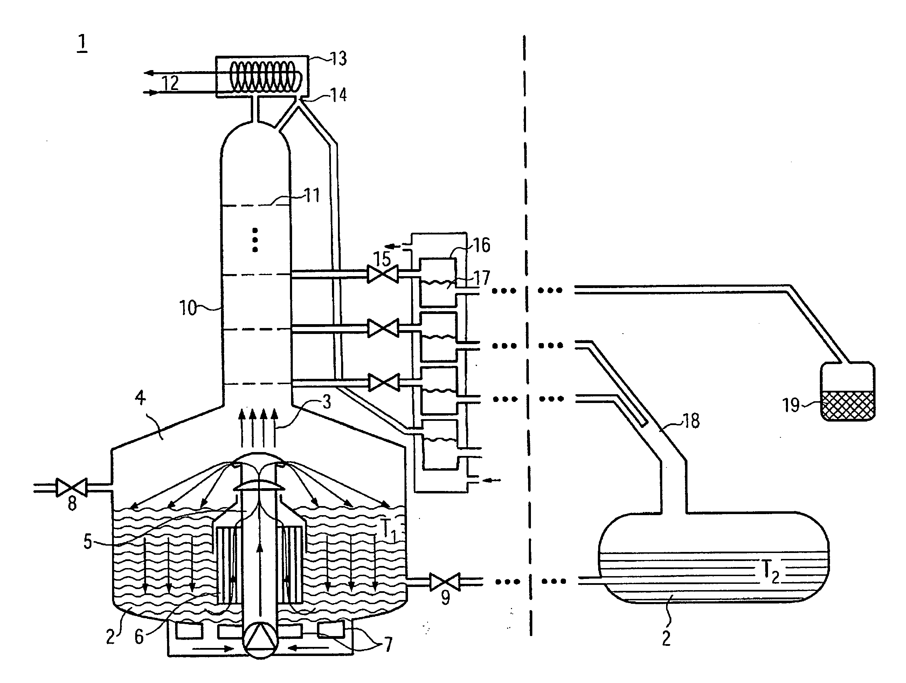

In Figur 1 ist schematisch eine Vorrichtung 1 zur Würzekochung beim Bierbauen dargestellt. In eine Würzepfanne 4 kann mittels einer Einlassleitung 8 zu kochende Würze 2 eingelassen werden. Die fertig gekochte Würze 2 kann über eine Auslassleitung 9 aus der Würzepfanne 4 abgelassen werden.

Die dargestellte Würzepfanne enthält einen Innenkocher, wobei eine frequenzgeregelte Pumpe die Würze 2 durch ein Zentralrohr 5 zu einer Strahlpumpe führt. Durch den in diesem Bereich entstehenden Sogeffekt kommt es zu einer kontinuierlichen Durchströmung der Heizrohre des Rohrbündel-Wärmetauschers 6. Ein Teilstrom der Würze 2 in den Innenkocherrohren wird dadurch nach oben gefördert und zusammen mit der durch das Zentralrohr 5 gepumpten Würze auf der Würzeoberfläche verteilt. Durch diese Zwangsanströmung wird ein Pulsieren der Würze während der Aufheizphase verhindert. Die Anstiche 7 im Pfannenboden gewährleisten zudem eine gute Durchmischung des Pfanneninhalts.

Im oberen Bereich ist die Würzepfanne 4 mit einem Dampfauslass versehen, der in den Bodenbereich eine Rektifizierkolonne 10 mündet. Die dargestellt Rektifizierkolonne 10 enthält als Kolonneneinbauten mehrere Kolonnenböden 11. Die Kolonnenböden 11 sind senkrecht zur Strömungsrichtung des Brüden 3 (Dampf der kochenden Würze) angeordnet und weisen einen Abstand zueinander auf. Um einen Brüdendurchtritt durch die Kolonnenböden 11 zu ermöglichen sind die Böden mit Brüdendurchtrittsöffnungen versehen. Durch die Durchtrittsöffnungen strömt der Brüden nach oben zu einem weiteren Kolonnenboden, dessen Temperatur niedriger ist als die der darunter liegenden Kolonnenböden.

Im Kopfbereich der Rektifizierkolonne 10 befindet sich eine Kühleinheit 13 sowie eine Vorrichtung 14 zur Einstellung des Rücklaufverhältnisses. Die Kühleinheit 13 dient zur Rückgewinnung von Restwärme 12 des Restbrüdens, die beispielsweise in anderen Brauprozessen verwendet werden kann. Die Kühleinheit dient außerdem zur Kondensierung von Aromastoffen die durch den Rektifizierprozess noch nicht aus den Brüden entfernt worden sind.

Der sich ansammelnde Enddampf des Brüden wird über eine Dampfablassleitung abgeleitet oder kann als bestimmtes aromahaltiges Destillat 17 in einem gekühlten Speicherbehältnis 16, welches beispielsweise Inertgas enthält gesammelt um später der nach dem Kochen abgekühlten Würze wider zugeführt zu werden. Zur Kühlung des Speicherbehälters 16 ist dieser von einem mit Kühlmittel duchflossenen Gehäuse umschlossen.

Der während der Kochphase aus der kochenden Würze 2 entweichende Brüden 3 gelangt über den Dampfauslass der Würzepfanne 4 in die Rektifizierkolonne 10 und durchströmt dort sukzessive die Kolonnenböden 11. Hierbei kondensieren Wasser und verschiedene Aromastoffe aus dem aufströmenden Brüden 3 aus und bilden flüssiges Brüdenkondensat (aromahaltiges Destillat 17), das sich auf den Kolonnenböden 11 als Flüssigkeitsfilm ansammelt.

Den Kolonnenböden 11 ist jeweils ein Ventil 15 zugeordnet, über das das aromahaltige Destillat 17 des Kolonnenbodens 11 ganz, teilweise oder entsprechend beispielsweise einer zeitabhängigen Funktion entleert werden kann.

Ein bestimmtes aromahaltiges Destillat 17 kann in einem vorzugsweise gekühlten Speicherbehältnis 16, welches beispielsweise Inertgas enthält, gelagert werden und kann später der nach dem Kochen wieder abgekühlten Würze 2 zugeführt werden 18. Ein Destillat, das ein unerwünschtes Aroma enthält, kann einem Entsorgungsbehälter 19 zugeführt werden und wird also nicht der abgekühlten Würze zugeführt.

## Patentansprüche

1. Verfahren zur Aromarückgewinnung beim Bierbrauen, wobei der Brüden, der während einer Kochphase der Würze (2) entweicht, einer dampfseitig mit einer Würzepfanne (4) verbundenen Rektifizierkolonne (10) zugeleitet und in dieser rektifiziert wird, **dadurch gekennzeichnet, dass** mehrere aromahaltige Destillate (17) aus dem Brüden (3) gewonnen und der Würze (2) nach der Kochphase zugeführt werden.

2. Verfahren nach Anspruch 1, **dadurch gekennzeichnet, dass** die aromahaltigen Destillate (17) mittels Kolonnenböden (11) gewonnen werden, welche die Rektifizierkolonne (10) umfasst.

3. Verfahren nach Anspruch 1 oder 2, **dadurch gekennzeichnet, dass** die aromahaltigen Destillate (17) über Ventile (15) der Würze (2) nach der Kochphase zugeführt werden.

4. Verfahren nach Anspruch 3, **dadurch gekennzeichnet, dass** die aromahaltigen Destillate (17) in vorzugsweise gekühlten Speicherbehältern (16) aufgenommen werden, die sich im Anschluss an die Ventile (15) befinden.

5. Verfahren nach Anspruch 4, **dadurch gekennzeichnet, dass** die Speicherbehälter (16) mit Inertgas befüllt sind.

6. Verfahren nach einem der Ansprüche 1 bis 5, **dadurch gekennzeichnet, dass** die zu kochende Würze (2) diskontinuierlich oder kontinuierlich der Würzepfanne (4) zugeführt wird.

7. Vorrichtung zur Durchführen des Verfahrens nach einem der Ansprüche 1 bis 6, mit einer Würzepfanne (4), einer dampfseitig mit dieser verbundenen Rektifizierkolonne (10) mit mehrere Kolonnenböden (11) und mit Ventilen (15) für die Rückführung der aromahaltigen Destillate (17).

8. Vorrichtung nach Anspruch 7, **dadurch gekennzeichnet, dass** die Würzepfanne (4) ein Innenkocher ist.

## Claims

1. A method for flavor recovery in beer brewing, wherein vapors escaping from wort (2) during a boiling phase are passed to a rectifying column (10) connected on the steam side to a wort kettle (4) and are rectified therein, **characterized in that** multiple flavor-containing distillates (17) are recovered from the vapors (3) and fed to the wort (2) after the boiling phase.

2. The method according to claim 1, **characterized in that** the multiple flavor-containing distillates (17) are obtained by means of multiple column bottoms (11) comprised by the rectifying column (10).

3. The method according to claim 1 or 2, **characterized in that** the multiple flavor-containing distillates (17) are fed via multiple valves (15) to the wort (2) after the boiling phase.

4. The method according to claim 3, **characterized in that** the multiple flavor-containing distillates (17) are received in multiple preferably cooled storage vessels (16) which are positioned next to the multiple valves (15).

5. The method according to claim 4, **characterized in that** the multiple storage vessels (16) are filled with inert gas.

6. The method according to any one of claims 1 to 5, **characterized in that** the wort (2) to be boiled is supplied discontinuously or continuously to the wort kettle (4).

7. An apparatus for carrying out the method according to any one of claims 1 to 6, comprising a wort kettle (4), a rectifying column (10) connected on the steam side to said kettle comprising multiple column bottoms (11) and multiple valves (15) for returning the multiple flavor-containing distillates (17).

8. The apparatus according to claim 7, **characterized in that** the wort kettle (4) is an internal boiler.

## Revendications

1. Procédé de récupération d'arômes lors du brassage de bière, les buées qui s'échappent pendant une phase de cuisson du moût (2) étant dirigées dans une colonne de rectification (10) reliée, côté vapeur, à une cuve de moût (4), et étant rectifiées dans cette colonne, **caractérisé en ce que** l'on produit, à partir des buées (3), plusieurs distillats (17) renfermant des arômes, que l'on amène au moût (2) après la phase de cuisson.

2. Procédé selon la revendication 1, **caractérisé en ce que** lesdits plusieurs distillats (17) renfermant des arômes sont produits au moyens de plateaux de colonne (11), que comprend la colonne de rectification (10).

3. Procédé selon la revendication 1 ou la revendication 2, **caractérisé en ce que** lesdits plusieurs distillats (17) renfermant des arômes sont amenés au moût (2) après la phase de cuisson, par l'intermédiaire de plusieurs vannes (15).

4. Procédé selon la revendication 3, **caractérisé en ce que** lesdits plusieurs distillats (17) renfermant des arômes sont recueillis dans plusieurs récipients de stockage (16), de préférence refroidis, qui se raccordent à la suite des dites plusieurs vannes (15).

5. Procédé selon la revendication 4, **caractérisé en ce que** lesdits plusieurs récipients de stockage (16) sont remplis de gaz inerte.

6. Procédé selon l'une des revendications 1 à 5 **caractérisé en ce que** le moût (2) à cuire est amené de manière discontinue ou continue dans la cuve à moût (4).

7. Dispositif pour la mise en oeuvre du procédé selon l'une des revendications 1 à 6, comprenant une cuve à moût (4), une colonne de rectification (10), qui y est reliée côté vapeur et comporte plusieurs plateaux de colonne (11), et comprenant également plusieurs vannes (15) pour le recyclage desdits plusieurs distillats (17) renfermant des arômes.

8. Dispositif selon la revendication 7, **caractérisé en ce que** la cuve à moût (4) est une cuve à cuiseur intérieur.
